Europäisches Patentamt

European Patent Office

Office européen des brevets

(11) Publication number: **0 130 670**
A1

## (12) EUROPEAN PATENT APPLICATION

(21) Application number: 84302881.2

(22) Date of filing: 27.04.84

(51) Int. Cl.⁴: **G 01 L 9/04**

(30) Priority: 27.04.83 GB 8311528

(43) Date of publication of application: 09.01.85
Bulletin 85/2

(84) Designated Contracting States: AT BE CH DE FR GB IT
LI NL SE

(71) Applicant: PERITRONIC MEDICAL INDUSTRIES PLC,
28 Welbeck Street, London, W1M 7PG (GB)

(72) Inventor: Wheeldon, Peter G., "The Chantries",
Warwicks Bench Guildford Surrey (GB)
Inventor: Kent, John, Aldborough Hatch, Byeworth Nr.
Petworth West Sussex (GB)

(74) Representative: Warren, Keith Stanley et al, BARON &
WARREN 18 South End Kensington, London W8 5BU
(GB)

(54) **Fluid pressure sensing apparatus.**

(57) Apparatus for sensing the fluid pressure within a flexible fluide delivery tube (2) comprises resilient means (1) for engaging the delivery tube, a strain gauge (3) coupled to the resilient means to detect deflection thereof in response to fluid pressure within the delivery tube, and means (9) for processing the output signals produced by the strain gauge (3) and deriving data corresponding to the fluid pressure within the delivery tube. The resilient means may comprise a channel-shaped device having opposed resilient and rigid side walls (1a, 1b) for embracing a portion of the delivery tube, the strain gauge (3) being mounted on the resilient wall (1a) of the channel.

## FLUID PRESSURE SENSING APPARATUS

The present invention relates to fluid pressure sensing apparatus and, more particularly, to such apparatus for monitoring fluid pressure within the delivery tube of a medical infusion pump or for use in other applications where there is a requirement for monitoring fluid pressure within a fluid flow tube without permitting direct access to the fluid flow, itself.

In a medical infusion pump, for example, which operates on a peristaltic principle and applies a peristaltic pumping action to the resilient walled delivery tube of a simple intraveneous infusion set, fluid delivery under pressure is achieved without violating the sterile barrier maintained internally within the infusion set. However, with such a system, there is a need for a pressure limiting facility in order to protect the patient and the infusion system from excessive pressure build-up in the delivery tube downstream of the pump, in the event of an occlusion or other blockage occurring. Such a facility requires apparatus for sensing or monitoring pressure within the delivery tube without, again, violating the sterile barrier represented by the tube and it is an object of the present invention to provide such apparatus.

The invention consists in apparatus for sensing fluid pressure within a fluid delivery tube, comprising resilient means for engaging the delivery tube, a strain gauge device coupled to the resilient means to detect deflection or distortion thereof in response to fluid pressure within the tube, and means for processing output signals produced by the strain gauge device and providing data corresponding to the fluid pressure within the delivery tube.

The resilient means may comprise a resilient member, to which the strain gauge is affixed, disposed in spaced relation with a rigid surface, the spacing being such that the delivery tube is slightly flattened or distorted when engaged between the resilient member and rigid surface. Conveniently, the resilient means is a channel-shaped device having opposed resilient and rigid side walls. However, in an alternative embodiment, it may be a channel-shaped member made from resilient material and having the strain gauge affixed to the underside of its external surface.

The apparatus may be calibrated so that the data produced by the processing means provides an indication of the pressure distorting the resilient member. The processing means may be adapted to produce an alarm signal when the processing means establishes that an output signal from the strain guage differs from a predetermined value or falls outside predetermined limits.

The invention is particularly suitable for sensing pressure changes within a fluid delivery tube and producing an alarm signal when the detected pressure falls outside predetermined limits. Hence, the processing means may comprise storage means for storing reference data corresponding to an initial or datum output signal produced by the strain gauge and comparator means for comparing data corresponding to subsequent output signals from the strain gauge with the reference data and initiating an alarm signal when the subsequent data differs from the reference data by more than a predetermined value. The alarm signal may be an audio and/or visual alarm signal. The visual alarm may comprise a digital display for displaying information corresponding to output signals produced by the strain gauge.

In the case where the apparatus is arranged to sense pressure changes, it may accommodate a range of different tube sizes because the only information required relates to pressure change rather than absolute pressure. Any variation in the initial distortion of the resilient means owing to different tube sizes is immaterial.

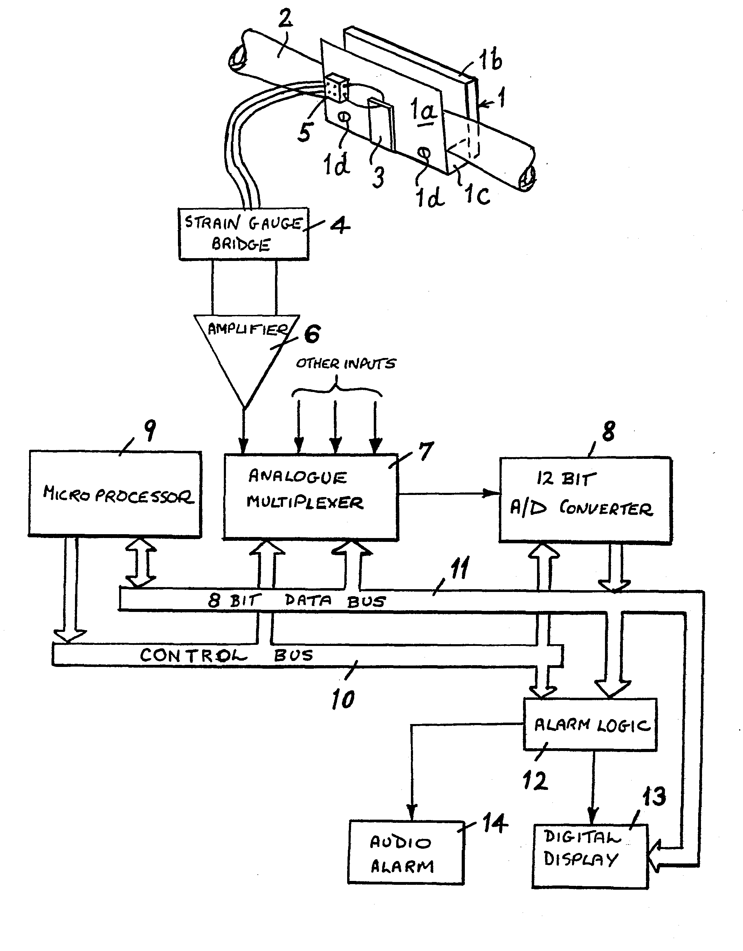

In order that the present invention may be more readily understood, reference will now be made to the accompanying drawing which is a schematic diagram of one embodiment of the invention.

Referring to the drawing, the apparatus includes a channel-shaped device 1 which comprises a resilient side wall 1a, made from spring steel or other similar resilient material, and a rigid side wall 1b connected to the resilient side wall, in opposed spaced relation therewith, by means of a rigid spacer bar 1c which is disposed between mutually adjacent edges of the two side walls and to which the two walls are fixed by suitable fastening means, such as, screws 1d. The side walls 1a, 1b are arranged to embrace a portion of a flexible or resilient walled delivery tube 2 loaded into a peristaltic pump (not shown), at a position downstream of the pump head. The spacing of the side walls 1a, 1b is such that, when the delivery tube is fitted into the channel device, the portion embraced by the side walls fits snugly between the arms and is slightly flattened or distorted. Conversely, the resilient side wall 1a is slightly deflected. Hence, the tube 2 is gripped by the side walls of the channel device and is retained in this position during a pumping operation. In use, the channel device 1 is so mounted that the resilient side wall 1a is free to deflect under the action of the fluid pressure within the tube 2 without interference. For example, it may be associated with tube guides housed within the peristaltic pump.

Bonded to the external surface of the resilient side wall 1a of the channel device, in a zone overlapping the marginal portion of the side wall 1a fastened to the spacer bar 1c, is a strain gauge 7 which is connected to a strain gauge bridge circuit 4 of electronic control circuitry for the system, via a termainal block 5 fastened to the side wall 1a. The output of the strain gauge bridge 4 is connected to an amplifier 6 which is connected to one of the plurality of inputs of an analogue multiplexer 7 having its output connected to an analogue-to-digital (A/D) converter 8. A microprocessor 9, conveniently, an 8-bit microprocessor, such as that marketed by RCA Inc. under the Model No. CDP 1806 Ace, is interconnected with the multiplexer 7 and the A/D converter 8 via a control bus 10 and an 8-bit data bus 11. The latter also interconnect the microprocessor with alarm logic and digital display circuitry 12,13. The alarm logic circuit 12 is connected to control an audio alarm 14 and a visual alarm indication associated with the digital display 13.

Upon loading of a primed delivery tube 2 into the channel device 1, a standing resistance is produced in the strain gauge 3 owing to the deflection of the side wall 1a by the tube which is, itself, slightly flattened. The resulting output signal from the strain gauge bridge 4 is amplified and sampled by the microprocessor 9 which switches the amplifier output through the multiplexer 7 to the A/D converter 8. The digital signal produced by the converter 8 is supplied to the microprocessor via the data bus 11 and is stored in the memory of the microprocessor as a reference datum against which future sample readings taken during operation of the pump are compared. As the pressure within the tube 2 varies during pumping, the resilient side wall 1a of the channel device 1 is either flexed outwardly or restores inwardly and these changes are registered in the output signal from the strain gauge bridge circuit 4.

An occlusion or partial occlusion of the delivery tube 2 causes outward deflection of the side wall 1a resulting in a change of strain gauge resistance and variation of the bridge circuit output signal. The microprocessor 9 samples the various inputs to the multiplexer 7 and, at the next sampling of the amplifier output, the change in digital output signal from the A/D converter 8 is compared with the reference datum or information stored in the microprocessor memory and, if the variation between the two values exceeds preset limits also stored in the microprocessor memory, the microprocessor signals the alarm logic 12 which operates the audio alarm 14 and causes a visual alarm signal to be displayed on the digital display 13 to attract the attention of the pump operator.  During normal pumping, the microprocessor 9 also supplied fluid pressure information to the digital display, via the data bus, in order to provide a visual display of fluid pressure information.

The multiplexer 7 permits the use of a sequence sampling system and the microprocessor 9 can interrogate the output of the A/D converter 8 for access to different information supplied to the various inputs of the multiplexer, thus keeping cost and component parts to a minimum through the multipurpose use of the same circuits.

Whilst a particular embodiment has been described, it will be apparent that modifications can be made without departing from the scope of the invention as defined by the appended claims.

0130670

## CLAIMS

1. Apparatus for sensing fluid pressure within a fluid delivery tube (2) without requiring access to the fluid flow therethrough, characterised by resilient means (1) for engaging the delivery tube (2) and adapted to be deflected in response to fluid pressure within said tube, a strain gauge device (3) coupled to said resilient means to detect deflection thereof, and means (9) for processing output signals produced by said strain gauge device to provide data corresponding to said fluid pressure within said delivery tube.

2. Apparatus as claimed in claim 1, characterised in that said resilient means comprises a resilient member (1a) disposed in spaced relation with a rigid surface (1b), the spacing being such that said delivery tube (2) may be disposed between said resilient member and said rigid surface in a slightly flattened condition.

3. Apparatus as claimed in claim 1, characterised in that said resilient means comprises a channel-shaped device (1) having opposed, spaced, resilient and rigid side walls (1a, 1b), the spacing being such that said delivery tube (2) is slightly distorted when engaged between said resilient rigid side walls of said channel device.

4. Apparatus as claimed in claim 1, 2 or 3, characterised in that said processing means is adapted to activate an alarm signal (14) in response to detecting an output signal produced by said strain gauge (3) which differs from an initial reference output signal by more than a predetermined value.

5.   Apparatus as claimed in claim 4, characterised in that said processing means is connected to control alarm means including an audio alarm (14) and a digital display (13), said processing means being arranged to actuate said audio alarm (14) and cause said digital display (13) to display a number indicative of the alarm condition in response to said processing means detecting an output signal differing from said initial reference signal by more than said predetermined value.

6.   Apparatus as claimed in any preceding claim, characterised in that said processing means (9) includes storage means for storing reference data corresponding to an initial output signal produced by said strain gauge (3) and comparator means for comparing data corresponding to subsequent output signals produced by said strain gauge with said reference data and initiating an alarm signal when said subsequent data differs from said reference data by more than a predetermined value.

7.   Apparatus as claimed in any preceding claim, characterised in that said strain gauge device (3) is connected to bridge circuit means (4) for producing analogue output signals.

8.   Apparatus as claimed in claim 7, characterised in that said bridge circuit means (4) has its output connected to an analogue-to-digital converter (7) for converting said analogue output signals to digital signals which are processed by said processing means (9).

9.   Apparatus as claimed in any preceding claim 1 to 7, characterised in that said strain gauge device (3) is connected to a bridge circuit (4), an amplifier (6) is connected to receive output signals from said bridge circuit and supply amplified output signals to an analogue-to-digital converter (7), and said analogue-to-digital converter is arranged to supply digital output signals to said processing means (9) under the control thereof.

0130670

1/1

0130670

European Patent
Office

**EUROPEAN SEARCH REPORT**

Application number

EP 84 30 2881

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | DE-B-2 038 771 (BENDIX CORP.) * Claim 1; column 2, line 60 - column 3 * | 1,2 | G 01 L 9/04 |
| X | EP-A-0 010 584 (IBM) * Claim 1; figures 2, 3 * | 1-5 | |
| X | GB-A-2 007 844 (GOODWOOD DATA SYSTEMS) * Figure 1; claims 1-3 * | 1,2 | |
| A | US-A-4 290 311 (G.A. BREWER) | | |

TECHNICAL FIELDS
SEARCHED (Int. Cl. 3)

G 01 L 9/00

The present search report has been drawn up for all claims

| Place of search | Date of completion of the search | Examiner |
|---|---|---|
| BERLIN | 07-08-1984 | KOEHN G |